# EUROPEAN PATENT SPECIFICATION

(11) **EP 2 377 822 B1**
(45) Date of publication and mention of the grant of the patent: **05.06.2013**
(21) Application number: 11162528.1
(22) Date of filing: 14.04.2011
(51) Int. Cl.: C03B 33/037, C03B 33/023

(54) **Glass strip cutting method and system**
Verfahren und Vorrichtung um Glasband zu schneiden
Procédé et appareil de découpe de bande de verre

(30) Priority: 14.04.2010 IT TO20100297
(43) Date of publication of application: 19.10.2011
(73) Proprietor: Bottero S.p.A., Cuneo (IT)
(72) Inventor: Guarguagli, Marco, 12100 Cuneo (IT); Masoero, Alberto, 12100 Cuneo (IT)
(74) Representative: Bergadano, Mirko

(56) References cited:
- GB-A- 1 173 617
- US-A- 3 497 957
- US-A- 3 581 615
- US-A- 3 703 115
- US-A- 3 802 306
- US-A1- 2001 007 217
- US-A1- 2008 264 994

## Description

The present invention relates to a method and an apparatus for cutting a glass strip.

As is known, sheets of glass are produced by transversely scoring and breaking a continuous strip of glass conveyed along a straight path. This is done using cutting systems disclosed for example in US 3,581,615 and comprising, in the strip travelling direction, a strip speed indicator assembly; a first scoring assembly for making two continuous longitudinal score lines close to the lateral edges of the strip; a second scoring assembly for making a succession of transverse score lines on the strip; and a break-off assembly for breaking the strip transversely along the score lines into individual sheets.

All the above assemblies are connected to a processing and control unit, which controls them according to the required sheet size and the strip speed from the indicator assembly.

The strip speed indicator assembly comprises an encoder detector with one or more wheels which roll along the glass strip; and a converter assembly for converting the signal from the encoder into a strip speed reading, by which to control the transverse scoring devices and, in particular, set the start of the scoring operation, the travelling speed of the scoring member along the relative scoring bridges, and the break-off operation.

Known systems of the above type operate perfectly well in ideal conditions, i.e. with substantially no change in temperature and in 'clean' environments, but for various reasons are often subject, even for only short periods, to sharp changes in temperature and dusty working conditions, which cause random variations in the outside diameter of the wheel, due to thermal expansion and/or material retention. As a result, the strip speed reading from the indicator assembly may differ from the actual strip speed, thus resulting in sheets of other than the programmed size and/or shape.

For this reason, the converter assembly is set manually, by removing one or more sample sheets from the system output, measuring the actual dimensions of the sample sheets on a measuring board, comparing the actual dimensions of the sheets with those of the cutting program, and manually adjusting the converter assembly to match the strip speed reading as closely as possible to the actual strip speed.

Even skilled operators, however, are rarely able to immediately detect a change in the shape of the sheets, and practically never in the size of the sheets, so that, with no or less than accurate manual adjustment, entire lots may be produced below standard, thus resulting in poor quality, production losses, and a high rejection rate. US 3,497,957 discloses a system in which the speed of the glass strip is adjusted through a correction factor.

Moreover, to cut the strip into sheets of any size, the scoring assembly normally comprises two or more adjacent, parallel scoring bridges, which must be perfectly synchronized not only with the speed of the strip but also with each other, so that either one may be used indifferently. Failure to synchronize the two scoring bridges is a common occurrence following maintenance of the scoring tool carriages, which are often left in other than the zero or start position, which, from the control standpoint, is tantamount to the bridges being spaced apart by other than the actual distance.

It is an object of the present invention to provide a glass strip cutting method designed to provide a simple, low-cost solution to the above drawbacks, and in particular to produce sheets of the same quality regardless of the conditions in which the strip is cut.

According to the present invention, there is provided a method of cutting a glass strip, as claimed in claim 1.

According to the present invention, there is also provided a system for cutting a glass strip, as claimed in claim 8.

A non-limiting embodiment of the invention will be described by way of example with reference to the accompanying drawings, in which :
Figure 1 shows a plan view, substantially in blocks, of a preferred embodiment of a glass strip cutting system in accordance with the teachings of the present invention;
Figure 2 shows a larger-scale detail of Figure 1;
Figures 3 to 5 show schematics of steps in the control method of the Figure 1 system.

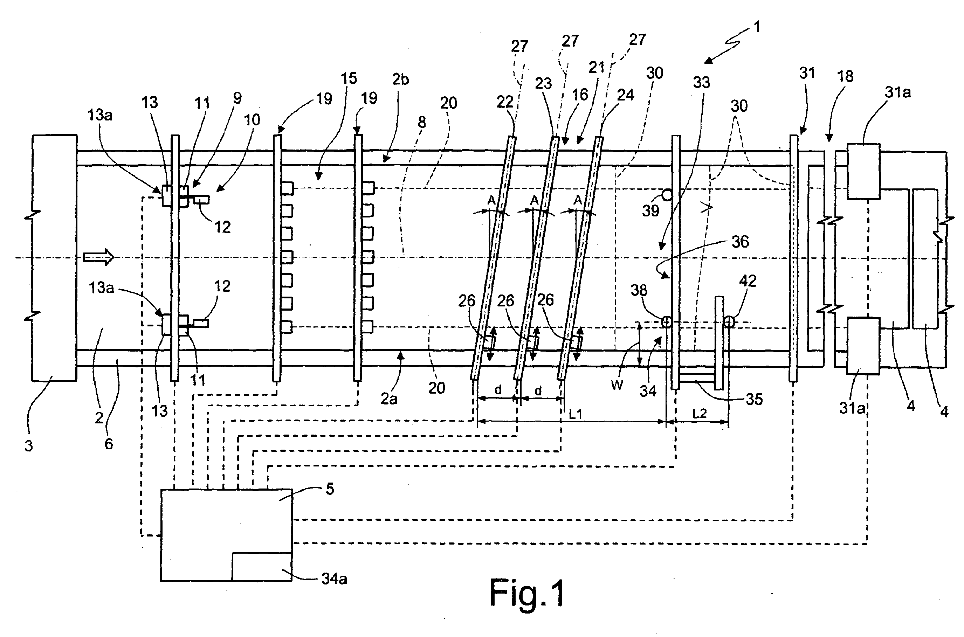

Number 1 in Figure 1 indicates as a whole an automatic system for cutting a glass strip 2, issuing from an oven 3, into individual sheets 4 of any size.

System 1 is automatically controlled continuously by an electronic control and synchronizing unit 5, and comprises a known, preferably roller type, conveying device 6 for feeding strip 2 along a straight path 8 and through a station 9 for detecting and setting the speed of strip 2. Station 9 houses a speed detecting device 10 connected to unit 5 and comprising two known encoder assemblies 11, each with a wheel 12 which rolls on strip 2. Each assembly 11 also comprises an adjustable converter assembly 13, which may be integrated in unit 5, and which receives a signal from relative encoder assembly 11, converts the signal into a proportional output signal indicating a detected strip speed, and transmits the output signal to unit 5. Being adjustable, each converter assembly 13 has an input 13a for a signal by which to modify or correct a conversion parameter of the signal from relative encoder assembly 11, so the same signal from relative assembly 11 may correspond to various output signals to unit 5.

As shown in Figure 1, system 1 comprises, in succession in the travelling direction of strip 2 and downstream from station 9, a longitudinal scoring station 15, a transverse scoring station 16, and a break-off station 18.

Station 15 is equipped with two known longitudinal scoring bridges 19 (not described in detail) for making two longitudinal score lines 20, each located a given distance from a respective longitudinal lateral edge 2a, 2b of strip 2; and station 16 is equipped with a transverse scoring assembly 21.

In the example shown, scoring assembly 21 comprises three adjacent, parallel, tilted scoring bridges 22, 23, 24 spaced apart by a fixed distance stored in unit 5. Each bridge 22, 23, 24 comprises a powered scoring tool 26, which runs along the bridge - in a direction 27 forming a fixed angle A, stored in unit 5, with a line perpendicular to path 8, and at a given speed also stored in unit 5 - to form a succession of score lines 30 on strip 2.

From scoring station 16, strip 2 is fed through break-off station 18, where the scored strip 2 is broken in known manner into sheets 4, first along score lines 30 by a break-off assembly 31, and then along score lines 20 by two known assemblies 31a.

As shown in Figure 1, between scoring station 16 and break-off station 18, strip 2 is fed through a further detecting station 33 equipped with an optical detecting assembly 34 connected to a comparing block 34a forming part of unit 5, and operation of which is described in detail below.

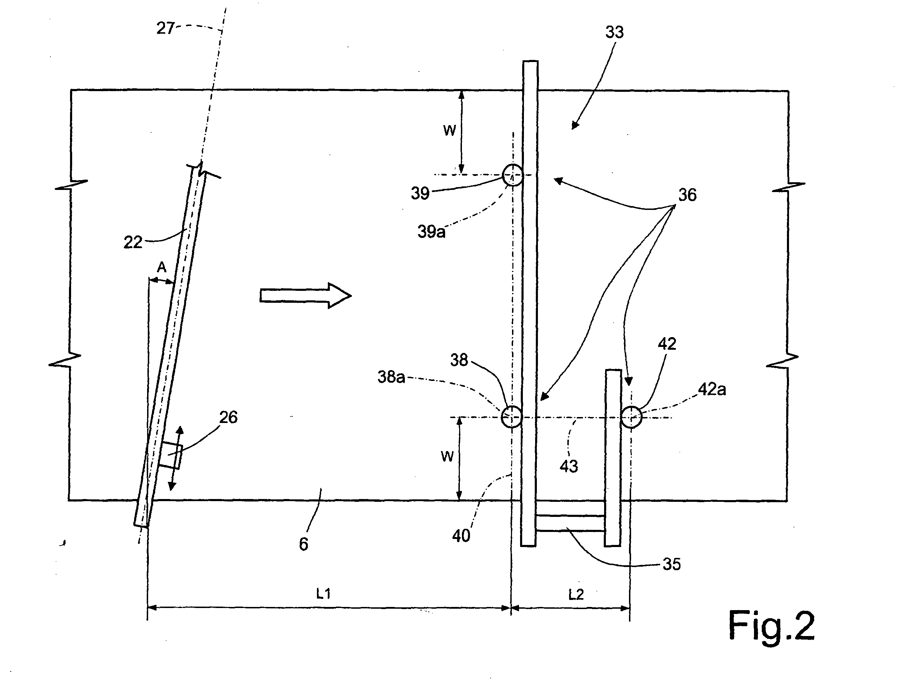

As shown in Figure 1 and in more detail in Figure 2, detecting assembly 34 extends astride strip 2, and comprises a fixed supporting frame 35, and an optical device 36 for detecting score lines 30 on strip 2. In the example shown, optical device 36 comprises two video cameras 38, 39 fitted integrally to frame 35 and having respective optical axes 38a, 39a, which are parallel to each other, are perpendicular to strip 2, and both intersect a fixed line 40 perpendicular to path 8 and located a fixed distance L1, stored in unit 5, from bridge 22. Axes 38a, 39a of video cameras 38, 39 are each located a given distance W from the respective longitudinal edge of conveying device 6.

As shown in Figure 2, optical device 36 also comprises a further video camera 42 fitted to frame 35 so that its optical axis 42a is parallel to axes 38a, 39a, and intersects a line 43 parallel to path 8 and intersected by axis 38a of video camera 38, from which axis 42a is separated by a fixed distance L2 stored in unit 5.

In a variation not shown, video cameras 38, 39, 40 are replaced with optical, e.g. laser, sensors for detecting transit of score lines 30, and transmitting a transit signal for each score line 30 to unit 5.

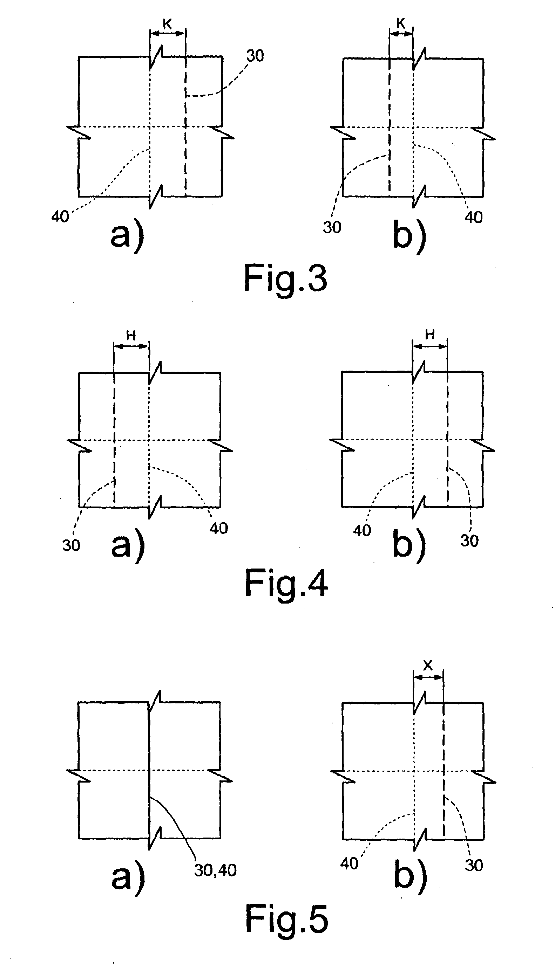

Operation of system 1 will now be described as of the condition in which strip 2 from oven 3 is fed along path 8; device 10 sends a signal, corresponding to the detected speed of strip 2, to unit 5; and, before strip 2 reaches station 15, unit 5 generates a cutting program on the basis of the required dimensions of sheets 4, thus defining the positions of transverse score lines 30. Unit 5 determines the actual position of each score line 30 along path 8, and corrects it whenever it differs from the position predicted on the basis of the detected speed of strip 2. The position correction is made by determining a correction factor, and transmitting a signal, proportional to the correction factor, to inputs 13a of assemblies 13, so as to continuously adjust or correct the detected speed transmitted to unit 5. The correction factor is determined by unit 5 activating video camera 38 a given time after score line 30 is completed by bridge 22, and in actual fact after score line 30 covers distance L1, so that, on the basis of the speed detected by device 10, score line 30 should coincide exactly with line 40 aligning video cameras 38 and 39. When activated, video camera 38 determines the actual position of a portion of score line 30 close to edge 2a of strip 2; and Figures 3a and 3b show two situations in which the actual speed of strip 2 is respectively faster and slower than the speed detected by device 10. In other words, the actual position of score line 30 is downstream from the predicted theoretical position in Figure 3a, and upstream from the predicted theoretical position in Figure 3b. In both cases, the corresponding sheet 4 would be cut to other than the programmed dimensions, so, in both cases, comparing block 34a determines the value and sign of the difference K between the theoretical and actual positions; and, on the basis of the difference value, unit 5 determines the correction factor necessary to eliminate it, and transmits a corresponding correction signal to inputs 13a of assemblies 13. In other words, the cutting program is 'shifted' along strip 2, so that the next score line, on covering distance L1, coincides exactly with line 40, and is therefore correctly positioned with respect to break-off assembly 31 at break-off station 18.

Simultaneously with video camera 38, unit 5 also activates video camera 39, which determines the actual position of a portion of the score line close to edge 2b of strip 2. In this case also, two situations may occur: a first shown in Figure 4a, in which the actual position of the portion of score line 30 is upstream from the theoretical position, i.e. from line 40; and a second shown in Figure 4b, in which the actual position of the portion of score line 30 is downstream from the theoretical position. In both cases, score line 30 would not be perpendicular to path 8, which means the sides of sheet 4 would not be square. So, in both cases, for video camera 39, as for video camera 38, unit 5 determines the value and sign of the difference H between the theoretical and actual positions; determines, on the basis of difference H, a further correction factor necessary to eliminate it; and, on the basis of the further correction factor, alters the set speed at which scoring tool 26 travels along the relative bridge.

Following maintenance of bridges 22, 23, 24, unit 5 independently synchronizes bridges 22, 23, 24 automatically, so they are perfectly interchangeable, as follows : a first score line 30 is made by a first bridge, e.g. bridge 22, which is considered the reference bridge; a second score line 30 is made by a second bridge, e.g. bridge 23 or 24; after said given time, unit 5 activates video camera 38 to determine the actual position of the first score line 30; operating as described previously, the difference between the actual and theoretical position is determined and zeroed by correcting the detected speed (Figure 5a); after a given time corresponding to distance L1 and the distance d between the two bridges considered, i.e. the time the score line takes to cover distance L1-d or L1-2d, depending on which bridge is used, unit 5 again activates video camera 38 to determine, as described, the actual position of the second score line (Figure 5b); after which, unit 5 determines the difference X (Figure 5b) between the actual positions of the two score lines, and generates a corresponding correction factor by which to correct the originally stored distance d, 2d, so that the two bridges considered, which are still physically spaced apart by distance d, 2d, are seen by unit 5 as being spaced apart by a distance other than d, 2d.

Alternatively, the two bridges may be synchronized as follows : a first score line 30 is made by a first bridge, e.g. bridge 22, which is considered the reference bridge; a second bridge, e.g. bridge 23, makes a second score line 30 at a distance L2 from the first score line 30; operating as described previously, video camera 42 determines the actual position of the first score line 30, and video camera 38 the actual position of the second score line 30; after which, unit 5 determines the distance between the two actual positions, determines the difference between the distance determined and distance L2, and accordingly determines a correction factor and generates a corresponding signal to alter the stored distance between the two bridges and so eliminate the difference between the distance determined and distance L2.

System 1 described therefore provides for producing a succession of sheets 4, all of the same shape and size, using any one of bridges 22-24 at station 16.

This is mainly due to the way in which the speed of strip 2 and of scoring tools along respective bridges 22-24 is corrected or set, but also to synchronizing bridges 22-24. That is, by continuously and fully automatically correcting the detected speed, the system is practically immune to external contaminants, such as dust, to operating temperatures, and, generally speaking, to any factors which may result in erroneous readings of the speed of strip 2 - in this case, the moving parts on strip 2. In the example described, in fact, any variation in the size of wheels 12 and therefore in the speed reading are automatically and immediately compensated by correcting the speed reading by means of a correction factor obtained by determining the actual positions of the score lines, with respect to theoretical lines, along the path.

Moreover, by synchronizing bridges 22-24, the system is set quickly and independently to an ideal cutting condition, even in the event of it being left in an operating condition differing slightly from the design condition as a result of external factors, such as routine maintenance. In which case, unit 5 generates a corresponding signal, on the basis of the actual positions of score lines 30, to correct the design value stored or acknowledged by unit 5.

Clearly, optical device 36 may be designed differently from the one shown by way of example, and in particular may comprise score line detecting devices other than the video cameras described.

Also, the speed of strip 2 may be detected by a device other than the one shown, and in particular not necessary equipped with parts rolling on strip 2.

## Claims

1. A method of cutting a glass strip (2), the method comprising the steps of feeding the strip (2) along a straight path (8); supplying a strip speed; and scoring the strip transversely to form a score line (30), and breaking the strip along said score line (30), on the basis of the supplied strip speed; said strip speed being supplied by detecting a strip speed, and correcting the detected strip speed by multiplying it by a correction factor; said correction factor being determined by determining, a given time after the scoring operation, the actual position of said score line (30) along said path (8), and determining a first difference between the actual position of the score line, and a theoretical position in which the score line would be located when the strip speed equals said detected strip, speed,
said first difference being determined using at least first optical means (38); by activating said first optical means (38) after said given time, when said score line reaches said theoretical position; and by determining the distance (K) between the theoretical position and the actual position of said score line (30).

2. A method as claimed in Claim 1, **characterized by** making a number of said score lines (30) on said strip; and in that said detected strip speed is corrected for each of said score lines.

3. A method as claimed in Claim 1 or 2, **characterized in that** multiplication of said detected speed by said correction factor is performed continuously and automatically using detecting and computing means (5;33), and by the detecting and computing means transmitting a signal, proportional to said correction factor, to correcting means for correcting said detected speed.

4. A method as claimed in any one of the foregoing Claims, **characterized by** storing a travelling speed of a scoring tool used to form said score line in a direction crosswise to said path; and correcting said travelling speed of said scoring tool by multiplying it automatically by a second correction factor; said second correction factor being determined by determining said first difference, after said given time, at a location close to a longitudinal side of said strip; substantially zeroing said first difference by correcting said detected strip speed; and determining, close to an opposite longitudinal side of said strip, a second difference between the actual position of said score line, and a theoretical position in which the score line would be located with the strip travelling at the corrected strip speed.

5. A method as claimed in Claim 4, **characterized in that** said second correction factor is determined automatically by positioning said first optical means (38) at a given distance from one of said longitudinal sides of the strip; positioning second optical means (39) close to the other of said longitudinal sides of said strip; simultaneously activating both said first and second optical means after said given time; and determining the distance between the theoretical position and the actual position of said score line by means of said second optical means.

6. A method as claimed in any one of the foregoing Claims, **characterized by** automatically synchronizing two scoring assemblies spaced a memorized distance apart; synchronizing being performed by forming a first score line by means of a first scoring assembly; forming a second score line by means of a second scoring assembly (27) different from said first scoring assembly; determining the actual position of said first score line by means of first detecting means; substantially zeroing said first difference by correcting said detected strip speed; determining the actual position of the second score line by means of said first detecting means; determining the distance between the actual positions of said first and second score line and a proportional correction parameter; and automatically multiplying the memorized distance between the two scoring assemblies by said correction parameter.

7. A method as claimed in any one of Claims 1 to 5, **characterized by** automatically synchronizing two scoring assemblies spaced a memorized distance apart; synchronizing being performed by multiplying said memorized distance by a further correction factor; said further correction factor being determined by forming a first score line by means of a first scoring assembly; forming a second score line by means of a second scoring assembly different from said first scoring assembly; determining the actual positions of the first and second score line by means of first and second detecting means separate from one another and spaced a given distance apart; determining the distance between said first and second score line; and determining the difference between said distance; said further correction factor being proportional to said difference.

8. A system (1) for cutting a glass strip (2), the system (1) comprising feed means (6) for feeding the strip (2) along a straight path (8); strip speed indicator means comprising strip speed detecting means (10) and adjustable correcting means (13) for correcting the detected strip speed by multiplying it by a correction factor; scoring means (21) for forming on said strip a score line (30) crosswise to said straight path (8); break-off means (31) for breaking the strip crosswise along said score line (30) into individual glass sheets (4); and control means (5) connected to said correcting means and to said scoring means; the system being **characterized by** also comprising further detecting means (34) connected to said control means and located between said scoring means and said break-off means, at a given distance from said scoring means, to determine the actual position of said score line (30) along said path; and comparing means (34a) for receiving a signal from said further detecting means, determining a first difference between said actual position and a theoretical reference position of the score line, and supplying said correcting means with a correction signal proportional to said first difference, said further detecting means comprising first optical detecting means (38); said control means emitting a signal to activate said first optical detecting means (38) a given time after said score line (30) is formed.

9. A system as claimed in Claim 8, **characterized in that** said first optical detecting means comprise a fixed first video camera (38) located along said straight path.

10. A system as claimed in Claim 8 or 9, **characterized in that** said further detecting means comprise second optical detecting means (39) aligned with said first optical detecting means (38) in a direction perpendicular to said path; said second optical detecting means (39) being activated by said control means.

11. A system as claimed in Claim 10, **characterized in that** said first and second optical detecting means comprise respective video cameras, which have respective axes intersecting said path, and are each located close to a respective longitudinal lateral edge (2a) of said strip (2).

12. A system as claimed in Claim 10 or 11, **characterized in that** said further detecting means also comprise third optical detecting means (42) located downstream from said first optical detecting means (38) in the travelling direction of said strip (2).

13. A system as claimed in Claim 12, **characterized in that** said third optical detecting means are located in a fixed position along said path, and at a fixed further given distance (L2) from said first optical detecting means (38); said first and third optical detecting means being aligned in a direction parallel to said path.

## Patentansprüche

1. Verfahren zum Schneiden eines Glasbands (2) mit den folgenden Schritten:
Zuführen des Bands (2) entlang eines geraden Pfads (8);
Bereitstellen einer Bandgeschwindigkeit; und
transversales Kerben des Bands zur Bildung einer Kerblinie (30) und Brechen des Bands entlang der Kerblinie (30) auf der Basis der bereitgestellten Bandgeschwindigkeit;
wobei die Bandgeschwindigkeit bereitgestellt wird durch Detektieren einer Bandgeschwindigkeit und Korrigieren der detektierten Bandgeschwindigkeit durch Multiplizieren mit einem Korrekturfaktor; wobei der Korrekturfaktor ermittelt wird durch Ermitteln der tatsächlichen Position der Kerblinie (30) entlang des Pfads (8) eine gegebene Zeit nach dem Kerbvorgang und Ermitteln einer ersten Differenz zwischen der tatsächlichen Position der Kerblinie und einer theoretischen Position, an welcher die Kerblinie sich befinden würde, wenn die Bandgeschwindigkeit gleich der detektierten Bandgeschwindigkeit wäre; wobei die erste Differenz ermittelt wird unter Verwendung mindestens einer ersten optischen Einrichtung (38) durch Aktivieren der ersten optischen Einrichtung (38) nach der gegebenen Zeit, wenn die Kerblinie die theoretische Position erreicht; und durch Ermitteln des Abstands (K) zwischen der theoretischen Position und der tatsächlichen Position der Kerblinie (30).

2. Verfahren nach Anspruch 1, **dadurch gekennzeichnet, dass** mehrere Kerblinien (30) an dem Band gebildet werden; und dadurch, dass die detektierte Bandgeschwindigkeit für jede Kerblinie korrigiert wird.

3. Verfahren nach Anspruch 1 oder 2, **dadurch gekennzeichnet, dass** das Multiplizieren der detektierten Geschwindigkeit mit dem Korrekturfaktor kontinuierlich und automatisch unter Verwendung von Detektions- und Berechnungseinrichtungen (5,33) durchgeführt wird, und dadurch, dass die Detektions- und Berechnungseinrichtungen ein zu dem Korrekturfaktor proportionales Signal zu Korrektureinrichtung senden, um die detektierte Geschwindigkeit zu korrigieren.

4. Verfahren nach einem der vorstehenden Ansprüche, **gekennzeichnet durch** Speichern einer Laufgeschwindigkeit eines Kerbwerkzeugs, das zur Bildung der Kerblinie in eine zu dem Pfad transversale Richtung verwendet wird; und Korrigieren der Laufgeschwindigkeit des Kerbwerkzeugs **durch** automatisches Multiplizieren mit einem zweiten Korrekturfaktor; wobei der zweite Korrekturfaktor ermittelt wird **durch** Ermitteln der ersten Differenz nach der gegebenen Zeit an einem Ort nahe an einer Längsseite des Bands; Bringen der Differenz im Wesentlichen auf null durch Korrigieren der detektierten Bandgeschwindigkeit; und Ermitteln einer zweiten Differenz zwischen der tatsächlichen Position der Kerblinie und einer theoretischen Position, an welcher die Kerblinie sich befinden würde, wenn das Band mit der korrigierten Bandgeschwindigkeit laufen würde, nahe an einer gegenüberliegenden Längsseite des Bands.

5. Verfahren nach Anspruch 4, **dadurch gekennzeichnet, dass** der zweite Korrekturfaktor automatisch ermittelt wird durch Positionieren der ersten optischen Einrichtung (38) in einem gegebenen Abstand von einer der Längsseiten des Bands; Positionieren einer zweiten optischen Einrichtung (34) nahe an der anderen der Längsseiten des Bands; gleichzeitiges Aktivieren der ersten und zweiten optischen Einrichtungen nach der gegebenen Zeit; und Ermitteln des Abstands zwischen der theoretischen Position und der tatsächlichen Position der Kerblinie mit Hilfe der zweiten optischen Einrichtung.

6. Verfahren nach einem der vorstehenden Ansprüche, **gekennzeichnet durch** automatisches Synchronisieren von zwei Kerbeinrichtungen, die in einem gespeicherten Abstand voneinander angeordnet sind; wobei das Synchronisieren durchgeführt wird durch Bilden einer ersten Kerblinie mit Hilfe einer ersten Kerbeinrichtung; Bilden einer zweiten Kerblinie mit Hilfe einer von der ersten Kerbeinrichtung separaten zweiten Kerbeinrichtung (27); Ermitteln der tatsächlichen Position der ersten Kerblinie mit Hilfe einer ersten Detektionseinrichtung; Bringen der ersten Differenz im Wesentlichen auf null **durch** Korrigieren der detektierten Bandgeschwindigkeit; Ermitteln der tatsächlichen Position der zweiten Kerblinie mit Hilfe der ersten Detektionseinrichtung; Ermitteln des Abstands zwischen den tatsächlichen Positionen der ersten und zweiten Kerblinie und eines proportionalen Korrekturfaktors; und automatisches Multiplizieren des gespeicherten Abstands zwischen den zwei Kerbeinrichtungen mit dem Korrekturparameter.

7. Verfahren nach einem der Ansprüche 1 bis 5, **gekennzeichnet durch** automatisches Synchronisieren von zwei in einem gespeicherten Abstand voneinander angeordneten Kerbeinrichtungen; wobei das Synchronisieren durchgeführt wird **durch** Multiplizieren des gespeicherten Abstands mit einem zusätzlichen Korrekturfaktor; wobei der zusätzliche Korrekturfaktor ermittelt wird durch Bilden einer ersten Kerblinie mit Hilfe einer ersten Kerbeinrichtung; Bilden einer zweiten Kerblinie mit Hilfe einer von der ersten Kerbeinrichtung separaten zweiten Kerbeinrichtung; Ermitteln der tatsächlichen Positionen der ersten und zweiten Kerblinie mit Hilfe von ersten und zweiten Detektionseinrichtungen, die separat voneinander und in einem gegebenen Abstand voneinander angeordnet sind; Ermitteln des Abstands zwischen der ersten und zweiten Kerblinie; und Ermitteln der Differenz zwischen dem Abstand; wobei der zusätzliche Korrekturfaktor proportional zu der Differenz ist.

8. System (1) zum Schneiden eines Glasbands (2); wobei das System (1) aufweist:
eine Zuführungseinrichtung (6) zum Zuführen des Bands (2) entlang eines geraden Pfads (8);
eine Bandgeschwindigkeit-Indikatoreinrichtung mit einer Bandgeschwindigkeit-Detektionseinrichtung (10) und einer einstellbaren Korrektureinrichtung (13) zum Korrigieren der detektierten Bandgeschwindigkeit durch Multiplizieren mit einem Korrekturfaktor;
einer Kerbeinrichtung (21) zum Bilden einer zu dem geraden Pfad (8) transversalen Kerblinie (30) an dem Band;
einer Brecheinrichtung (31) zum Brechen des Bands transversal entlang der Kerblinie (30) in einzelne Glasplatten (4); und
eine mit der Korrektureinrichtung und der Kerbeinrichtungen verbundene Steuereinrichtung (5);
wobei das System **dadurch gekennzeichnet ist, dass** es außerdem aufweist: eine zusätzliche Detektionseinrichtung (34), die mit der Steuereinrichtung verbunden ist und zwischen der Kerbeinrichtung und der Brecheinrichtung in einem gegebenen Abstand von der Kerbeinrichtung angeordnet ist, um die tatsächliche Position der Kerblinie (30) entlang des Pfads zu ermitteln; und eine Vergleichseinrichtung (34a) zum Empfangen eines von der zusätzlichen Detektionseinrichtung herkommenden Signals, Ermitteln einer ersten Differenz zwischen der tatsächlichen Position und einer theoretischen Referenzposition der Kerblinie und Versorgen der Korrektureinrichtung mit einem Korrektursignal, das zu der ersten Differenz proportional ist,
wobei die zusätzliche Detektionseinrichtung eine erste optische Detektionseinrichtung (38) aufweist; die Steuereinrichtung ein Signal aussendet, um die erste optische Detektionseinrichtung (38) eine gegebene Zeit nach Bilden der Kerblinie (30) zu aktivieren.

9. System nach Anspruch 8, **dadurch gekennzeichnet, dass** die ersten optische Detektionseinrichtung eine entlang des geraden Pfads fest angeordnete erste Videokamera (38) aufweist.

10. System nach Anspruch 8 oder 9, **dadurch gekennzeichnet, dass** die zusätzlichen Detektionseinrichtung eine zweite optische Detektionseinrichtung (39) aufweist, die mit der ersten optischen Detektionseinrichtung in einer zu dem Pfad senkrechten Richtung in einer Linie ausgerichtet sind; wobei die zweiten optische Detektionseinrichtung (39) von der Steuereinrichtung aktiviert wird.

11. System nach Anspruch 10, **dadurch gekennzeichnet, dass** die ersten und zweiten optischen Detektionseinrichtungen jeweilige Videokameras aufweisen, die jeweilige den Pfad kreuzende Achsen haben und jeweils nahe an einer jeweiligen Längsseitenkante (2a) des Bands angeordnet sind.

12. System nach Anspruch 10 oder 11, **dadurch gekennzeichnet, dass** die zusätzliche Detektionseinrichtung außerdem eine dritte optische Detektionseinrichtung (42) aufweiset, die in Laufrichtung des Bands (2) stromabwärts der ersten optischen Detektionseinrichtung (38) angeordnet ist.

13. System nach Anspruch 12, **dadurch gekennzeichnet, dass** die dritte optischen Detektionseinrichtung in einer festen Position entlang des Pfads und in einem festen zusätzlichen gegebenen Abstands (L2) von der ersten optischen Detektionseinrichtung (38) angeordnet ist; wobei die erste und dritte optische Detektionseinrichtung in einer zu dem Pfad parallelen Richtung in einer Linie ausgerichtet sind.

## Revendications

1. Procédé pour couper une bande de verre (2), le procédé comportant les étapes consistant à amener la bande (2) le long d'une trajectoire rectiligne (8) ; à générer une vitesse de la bande ; et à entailler la bande transversalement pour former une ligne de coupe (30) ; et à briser la bande le long de la ligne de coupe (30) ; sur la base de la vitesse de la bande amenée; ladite vitesse de la bande amenée étant déterminée par une vitesse de bande, et à corriger ladite vitesse de bande en la multipliant par un facteur de correction ; ledit facteur de correction étant déterminé en déterminant un délai donné après l'opération consistant à effectuer l'entaille, la position effective de ladite ligne de coupe (30) le long de la trajectoire (8) ; et à déterminer une première différence entre la position effective de la ligne de coupe et une position théorique dans laquelle la bande devrait se trouver si la vitesse de bande était égale à la vitesse de la bande détectée, ladite première différence étant déterminée en utilisant au moins des premiers moyens optiques (38) en activant lesdits premiers moyens optiques (38) après ledit délai donné, lorsque ladite ligne de coupe atteint ladite position théorique ; et en déterminant la distance (k) entre la position théorique et la position effective de ladite ligne de coupe (30).

2. Procédé selon la revendication 1, **caractérisé en ce que** l'on effectue plusieurs de ces lignes de coupe (30) sur ladite bande; et **en ce que** les vitesses de bandes détectées sont corrigées pour chacune desdites lignes de coupe.

3. Procédé selon la revendication 1 ou 2, **caractérisé en ce que** la multiplication de la vitesse détectée par le facteur de correction est effectuée de façon continue et automatiquement en utilisant des moyens de détection et de calcul (5, 33) et par la transmission d'un signal par les moyens de détection et de calcul, ce signal étant proportionnel audit facteur de correction, pour corriger la vitesse détectée.

4. Procédé selon l'une quelconque des revendications précédentes, **caractérisé en ce que** l'on mémorise une vitesse de déplacement d'un outil pour effectuer l'entaille en vue de former ladite ligne de coupe dans une direction transversale par rapport à ladite trajectoire ; et l'on corrige ladite vitesse de déplacement dudit outil pour effectuer l'entaille en la multipliant automatiquement par un second facteur de correction ; ledit second facteur de correction étant déterminé en déterminant ladite première différence après ledit délai donné, en un endroit proche d'un côté longitudinal de ladite bande ; l'on annule ladite première différence en corrigeant ladite vitesse détectée de la bande ; l'on détermine à proximité d'un côté longitudinal opposé de ladite bande, une seconde différence entre la position effective de ladite ligne de coupe, et une position théorique dans laquelle la ligne de coupe se trouverait si elle avançait à la vitesse corrigée de la bande.

5. Procédé selon la revendication 4, **caractérisé en ce que** ledit second facteur de correction est déterminé automatiquement en positionnant lesdits premiers moyens optiques (38) à une distance donnée de l'un des côtés longitudinaux de la bande ; en positionnant les seconds moyens optiques (34) de façon proche de l'autre côté longitudinal de ladite bande ; en activant simultanément à la fois lesdits premiers et seconds moyens optiques après ledit délai donné ; et en déterminant la distance entre la position théorique et la position effective de la ligne de coupe au moyen desdits seconds moyens optiques.

6. Procédé selon l'une quelconque des revendications précédentes, **caractérisé en ce que** l'on synchronise automatiquement deux ensembles pour effectuer une entaille, espacés d'une certaine distance mémorisée ; la synchronisation étant effectuée en réalisant une première ligne de coupe au moyen d'un premier ensemble pour effectuer une entaille ; en réalisant une seconde ligne de coupe au moyen d'un second ensemble pour effectuer une entaille (27) différent dudit premier ensemble pour effectuer une entaille ; l'on détermine la position effective de ladite première ligne de coupe par des premiers moyens de détection ; l'on annule ladite première différence en corrigeant ladite vitesse de bande détectée ; l'on détermine la position effective de la seconde ligne de coupe par lesdits premiers moyens de détection ; l'on détermine la distance entre les positions effectives des première et seconde lignes de coupe et un facteur de correction proportionnel ; et l'on multiplie automatiquement la distance mémorisée entre les deux ensembles pour effectuer une entaille, par ledit facteur de correction.

7. Procédé selon l'une quelconque des revendications 1 à 5, **caractérisé en ce que** l'on synchronise automatiquement deux ensembles pour effectuer une entaille, espacés d'une certaine distance mémorisée ; l'on synchronise automatiquement en multipliant ladite distance mémorisée, par un autre facteur de correction ; ledit autre facteur de correction étant déterminé en formant une première ligne de coupe avec un premier ensemble pour effectuer une entaille ; en formant une seconde ligne d'entaille avec un second ensemble pour effectuer une entaille différent du premier ensemble pour effectuer une entaille ; l'on détermine les positions effectives de la première et de la seconde lignes de coupe par des premiers et des seconds moyens de détection distincts les uns des autres et espacés d'une distance donnée ; l'on détermine la différence entre ladite distance ; ledit autre facteur de correction étant proportionnel à ladite différence.

8. Système (1) pour découper une bande de verre (2), le système (1) comportant des moyens d'alimentation (6) pour amener la bande (2) le long d'une trajectoire rectiligne (8) ; des moyens indicateurs de vitesse comportant des moyens de détection (10) de la vitesse d'amenée de la bande ; et des moyens ajustables de correction (13) pour corriger la vitesse détectée de la bande en la multipliant par un facteur de correction ; des moyens (21) pour effectuer une entaille pour former une ligne de coupe (30) ; des moyens de rupture (31) sur ladite bande, transversalement par rapport à la trajectoire rectiligne (8) en feuille de verre individuelles (4); des moyens de rupture (31) pour briser la bande le long de la ligne de coupe (30) en feuilles individuelles (4); et des moyens de commande (5) connectés auxdits moyens de correction et audits moyens pour effectuer une entaille; le système étant **caractérisé en ce qu'**il comporte des moyens de détection complémentaires (34) connectés auxdits moyens de commande et localisés entre lesdits moyens pour effectuer une entaille et lesdits moyens de rupture, à une distance donnée desdits moyens pour effectuer une entaille, en vue de déterminer la position de ladite ligne de coupe (30), le long de ladite trajectoire ; et des moyens de comparaison (34a) pour recevoir un signal desdits moyens de détection complémentaires, en vue de déterminer une première différence entre la position effective et une position théorique de la ligne de coupe et d'appliquer ladite correction avec un signal de correction proportionnel à ladite première différence, lesdits moyens de détection complémentaires comportant des premiers moyens optiques de détection (38) ; lesdits moyens de commande émettant un signal pour activer lesdits moyens de détection (38) après un délai donné après la formation de la ligne de coupe (30).

9. Système selon la revendication 8, **caractérisé en ce que** lesdits premiers moyens optiques de détection comportent une première caméra vidéo (38) localisée le long de ladite trajectoire rectiligne.

10. Système selon la revendication 8 ou 9, **caractérisé en ce que** lesdits moyens de détection complémentaires comportent des seconds moyens de détection optiques (39) alignés avec lesdits premiers moyens de détection optique dans une direction perpendiculaire à ladite trajectoire ; lesdits seconds moyens optiques de détection (39) étant activés par lesdits moyens de commande.

11. Système selon la revendication 10, **caractérisé en ce que** lesdits premiers et seconds moyens de détection optique comportent respectivement des caméras vidéo qui sont disposées chacune à proximité d'un des côtés longitudinaux (23) de la bande (2).

12. Système selon la revendication 10 ou 11, **caractérisé en ce que** les moyens de détection complémentaires comportent également des troisièmes moyens de détection optique (42) localisés en aval par rapport auxdits premiers moyens de détection optique (38) dans la direction de déplacement de ladite bande (2).

13. Système selon la revendication 12, **caractérisé en ce que** lesdits troisièmes moyens de détection optique sont disposés dans une position fixe le long de la trajectoire et à une distance fixe donnée (L2) desdits premiers moyens de détection optique (38) ; lesdits premiers et troisièmes moyens de détection optique étant alignés selon une direction parallèle à ladite trajectoire.
